# EUROPÄISCHE PATENTSCHRIFT

(11) **EP 1 215 110 B1**
(45) Veröffentlichungstag und Bekanntmachung des Hinweises auf die Patenterteilung: **16.03.2005**
(21) Anmeldenummer: 01128941.0
(22) Anmeldetag: 06.12.2001
(51) Int. Cl.: B62D 65/00

(54) **Montageanordnung mit "Förderband" für die Endbearbeitung von bereits vormontierten Personenkraftwagen**
Mounting arrangement with conveyor belt , for the finishing work on already preassembled motor cars
Agencement de montage avec bande de transport , pour le travail final des véhicules déja préassemblées

(30) Priorität: 14.12.2000 DE 10062465
(43) Veröffentlichungstag der Anmeldung: 19.06.2002
(73) Patentinhaber: ContiTech Transportbandsysteme GmbH, 30165 Hannover (DE)
(72) Erfinder: Deiters, Rolf-Hartmut, 37589 Kalefeld (DE)
(74) Vertreter: Schneider, Egon

(56) Entgegenhaltungen:
- EP-A- 1 059 214
- DE-A- 2 142 516

## Beschreibung

Die Erfindung betrifft eine Montageanordnung mit mindestens einem sogenannten "Werkerband", d. h. einem Gleitgurt, der auf mindestens einem ortsfesten Gleittisch abläuft, gemäß dem Oberbegriff des Anspruchs 1, wie beispielweise in EP-A-1 059 214 beschrieben wird.

Vormontierte und bereits mit Rädern versehene Personenkraftwagen werden für die Endbearbeitung auf sogenannte "Werkerbänder" gestellt und mit Hilfe von Radstoppern darauf fixiert. Dabei wird das Werkarband von den zu bearbeitenden Fahrzeugen punktuell im Bereich der Radstandsflächen belastet. Diese punktuelle Belastung des Werkerbandes geht einher mit punktuell erhöhter Friktion zwischen dem umlaufenden Werkerband und dem ortsfesten Gleittisch, auf dem das Werkerband abläuft.
Dies hat zur Folge, dass bei Gleitgurten mit fest darauf angebrachten Radstoppern punktuell ein vorzeitiges Durchscheuern der textilen Gleitlage im Bereich der Radstandsflächen eintritt. Ein weiterer Nachteil besteht in einer erhöhten Leistungsaufnahme in den Antrieben. Auch können diverse Betriebsstörungen auftreten: Quietschgeräusch und Band-Ruckeln; selbst Band-Stillstand ist nicht auszuschließen.

Zusammenfassend ist festzuhalten: Die punktuell erhöhte Friktion zwischen Werkerband und Gleittisch tritt nur bei Gurten mit Radstoppern auf, die sich vorzugsweise an fest vorgegebenen Positionen befinden. Durch diese Radstopper sind die jeweiligen Radstandsflächen festgelegt. Je stärker (häufiger oder höher) die Belastung, desto früher der Ausfall durch vorzeitiges Durchscheuern der Gleitlage des gegenüber dem jeweils ortfesten Gleitboden vorwärtsbewegten Gleitgurtes.

Die Aufgabe der Erfindung besteht in der Beschreibung einer Maßnahme zur Vermeidung des unter den Radstandsflächen erhöht auftretenden Verschleißes.
Es sollen die gefürchteten Durchscheuerstellen im Bereich der Radauflageflächen verhindert werden.
Diese Aufgabe wird im wesentlichen mit den Merkmalen des Anspruchs 1 gelöst; die Unteransprüche zeigen vorteilhafte Details und Weiterbildungen.

Erfindungsgemäß befindet sich zwischen einem endlosen Werkerband (Gleitgurt) und einem Gleittisch ein endloser Verschleißgurt. Beim Betrieb der Anordnung wird dieser Verschleißgurt vom Werkerband mitgenommen und bewegt sich mit der gleichen Geschwindigkeit mit, so dass zwischen Werkerband und Verschleißgurt kein Verschleiß durch gleitende Reibung auftritt, Wegen gleitender Reibung kann jedoch Verschleiß an der Grenzfläche Verschleißgurt/Gleittisch auftreten.

Gleitgurt und Verschleißgurt unterscheiden sich in ihrer Länge voneinander. Daraus ergibt sich, dass beim nächsten und allen folgenden Umläufen Werkerband und Verschleißband nicht wieder an exakt gleicher Stelle miteinander in Kontakt gelangen. D. h.: Der Verschleißgurt läuft auf einem unterschiedlichen Umfang zum Werkerband ab, so dass bei dem nächsten Umlauf nicht wieder an exakt gleicher Stelle eine Beaufschlagung durch das stehende Fahrzeug erfolgt.
Da die Werkerbänder fast ausschließlich an den Radstandsflächen belastet werden, ergibt sich somit ein ständiger Wechsel der Belastungs- und damit Verschleißpunkte an der Unterseite des Verschleißgurtes. Wegen dieses ständigen Wechsels der jeweiligen Verschleißpunkte tritt somit ein stark verzögerter Verschleiß ein. Das bedeutet, dass die Nutzungsdauer der erfindungsgemäßen Werkerband-Anordnung mit Hilfe des mindestens einen Verschleißgurtes um ein Vielfaches erhöht ist.

Gemäß Anspruch 2 sind Verschleißgurte lediglich für den Spurbereich der Räder, d. h. für den Spurbereich der Radstopper vorgesehen. Damit verringert sich der Flächenbedarf an Gleitgurten, was zu einer Verbilligung der Anordnung führt.

Die Verschleißgurte sind vorzugsweise paarweise im Spurbereich der Radstopper angeordnet. Zur Aufnahme dieser Verschleißgurte können im Gleittisch entsprechend groß dimensionierte Aussparungen eingelassen sein, wobei die Tiefe dieser Aussparungen der Stärke der Verschleißgurte gleicht, so dass sich insgesamt eine plane Werkerband-Oberfläche ergibt.

Als vorteilhaft hat sich erwiesen, wenn der Gleitgurt mit einem quersteifen, zweilagigen Gewebe aus Polyester in Kette und Schuss verstärkt ist, wobei die Tragseite eine Beschichtung von ca. 0,5 mm PVC aufweist und die Laufseite mit einem synthetischen, Textilfasern stabilisierenden Material (z. B. Polyurethan) imprägniert ist.

Durch den in Anspruch 5 genannten Aufbau von Werkerband und/oder Verschleißgurt ergibt sich eine optimale Druckverteilung im Bereich der Radstandsflächen, so dass eine punktuelle Belastung und damit ein punktueller Verschleiß zuverlässig vermieden wird.

Das erfindungsgemäße Werkerband ist so breit ausgebildet, dass es als sogenanntes "Mitfahrband" benutzt werden kann. Dabei beträgt die Bandgeschwindigkeit ca. 1 m/Min.

Da der Verschleißgurt reibschlüssig von dem Werkerband mitgenommen wird, ist kein separater Antrieb für den Verschleißgurt erforderlich.
Auf diese Weise ist ein abgenutzter Verschleißgurt auch relativ einfach auswechselbar.

Weitere Einflussmöglichkeiten zur Verschleißverminderung der erfindungsgemäßen Anordnung sind in den folgenden Merkmalen zu sehen:
1. Anlagenzustand (Stöße der Gleitböden im Stoßbereich):
   - Höhenunterschied Boden - Boden,
   - Kantenschärfe der Gleitböden,
   - Abstand Gleitboden - Trommel,
   - Höhenunterschied Gleitboden - Trommel.
2. Gleitboden, Material:
   - Holz,
   - Edelstahl,
   - Polyethylen,
   - Polyurethan,
   - Polyamid.
3. Oberfläche, Fremdeinfluss (z. B. Feuchtigkeit, Wachse).
4. Gleitlage:
   - Gewebekonstruktion,
   - Polyester-Gewebe,
   - Polyamid-Gewebe,
   - Folien.
5. Flächenpressung:
   - Verringerung durch größere Belastungsfläche,
   - Vergleichmäßigung, z. B. größere Fläche durch aufgebrachte Stahlplatten (Aufpanzerung).

Im folgenden wird die erfindungsgemäße Montageanordnung anhand der beigefügten Zeichnungen näher erläutert. Es zeigt:
Fig. 1 eine Prinzipdarstellung der erfindungsgemäßen Montageanordnung in Seitenansicht;
Fig. 2 eine herkömmliche Werkerband-Anordnung;
Fig. 3 einen Verschleißpunkt zwischen zwei Radstoppern;
Fig. 4 eine Ausführungsform der erfindungsgemäßen Montageanordnung mit paarweise angeordneten Verschleißgurten, von vorn betrachtet,
Fig. 5 den erfindungsgemäßen Gurtaufbau, und zwar
Fig. 5a einen Querschnitt durch ein Werkerband und
Fig. 5b einen Querschnitt durch einen Verschleißgurt, und

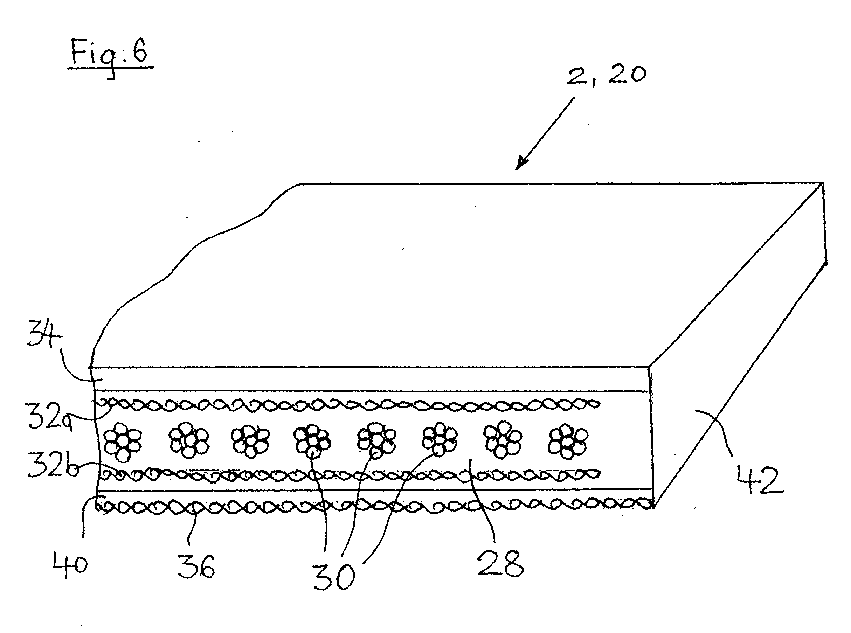

Fig. 6 einen Ausschnitt aus einem alternativen Gurt in perspektivischer Sicht.

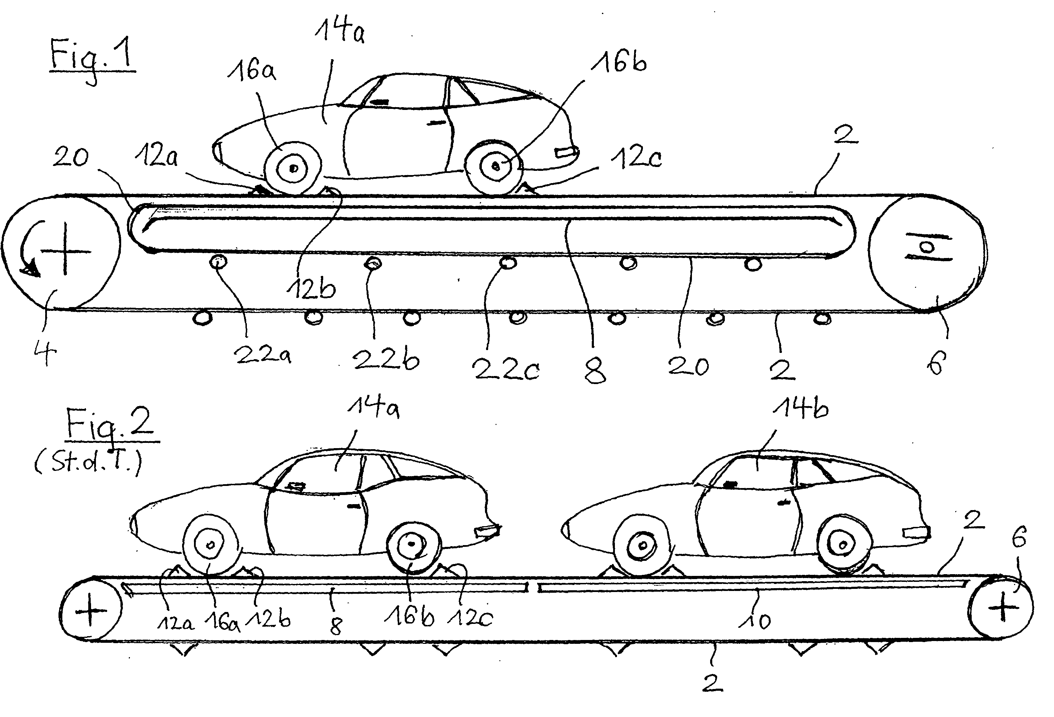

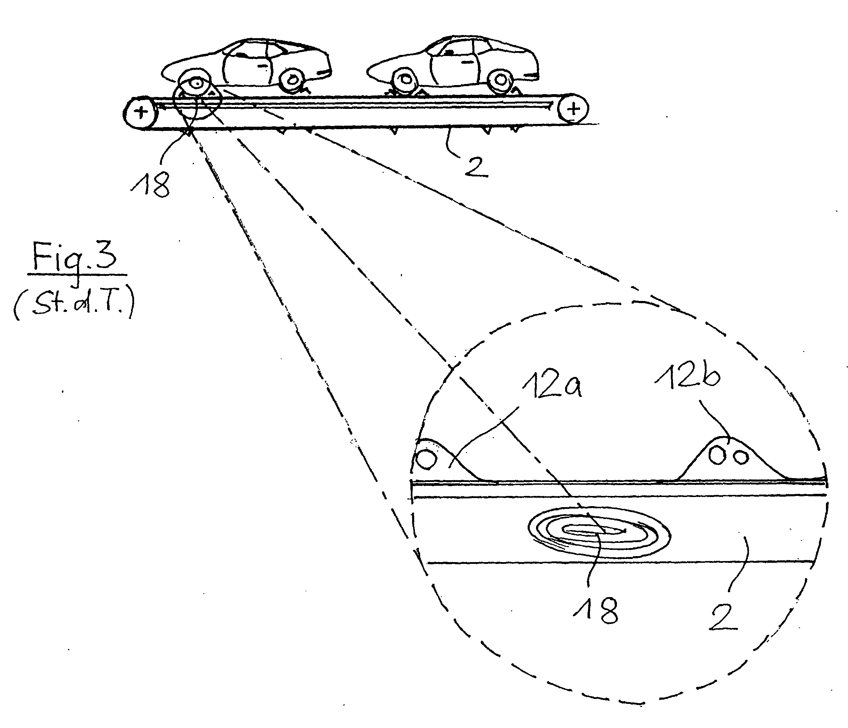

Die in Fig. 2 dargestellte herkömmliche Anordnung besteht aus einem endlosen, sogenannten Werkerband (Gleitgurt) 2, das über zwei Rollen (Trommeln) 4, 6 läuft, von denen die eine als Antriebsrolle 4 dient. Der vorlaufende Abschnitt des Werkerbandes 2 wird von zwei Gleittischen 8, 10 unterstützt. Auf dem Werkerband 2 sind sogenannte Radstopper 12a, 12b, ... zur Arretierung von bereits (fast) fertig montierten und mit eigenen Rädern 16a, 16b, ... versehenen Personenkraftwagen 14a, 14b, ... aufvulkanisiert.

Während des Betriebs gleitet das Werkerband (Gleitgurt) 2 über die Gleittische 8, 10. Wegen der punktuellen Belastung unter den Rädern 16a, 16b, ... kommt es an den Belastungspunkten 18 zu erhöhtem Verschleiß (Fig. 3). Dadurch ist die Lebensdauer herkömmlicher Werkerbänder 2 stark eingeschränkt.

Die in Fig. 1 gezeigte erfindungsgemäße Anordnung ist weitgehend mit einer herkömmlichen Anordnung vergleichbar. Auch hier gibt es ein Werkerband 2, welches über Rollen 4, 6 läuft, wovon eine Rolle 4 ebenfalls als Antriebsrolle dient. Und auch hier wird das Werkerband 2 durch einen Gleittisch 8 unterstützt. Der wesentliche Unterschied zu herkömmlichen Anordnungen besteht in einem zwischen Werkerband 2 und Gleittisch 8 angeordneten Verschleißgurt 20. Dieser Verschleißgurt 20 ist ebenso wie der Gleitgurt 2 endlos ausgebildet und wird über Rollen 22a, 22b, ... geführt.

Ein wesentliches Merkmal der Erfindung besteht darin, dass die Länge des Verschleißgurtes 20 von der Länge des Werkerbandes (Gleitgurtes) 2 abweicht. Dies hat zur Folge, dass bei jedem Umlauf ein jeweils wechselnder Abschnitt des Verschleißgurtes 20 der Unterseite des Werkerbandes 2 gegenübersteht. Damit wechseln insbesondere auch die Belastungspunkte 18 im Bereich der Radstandsflächen.

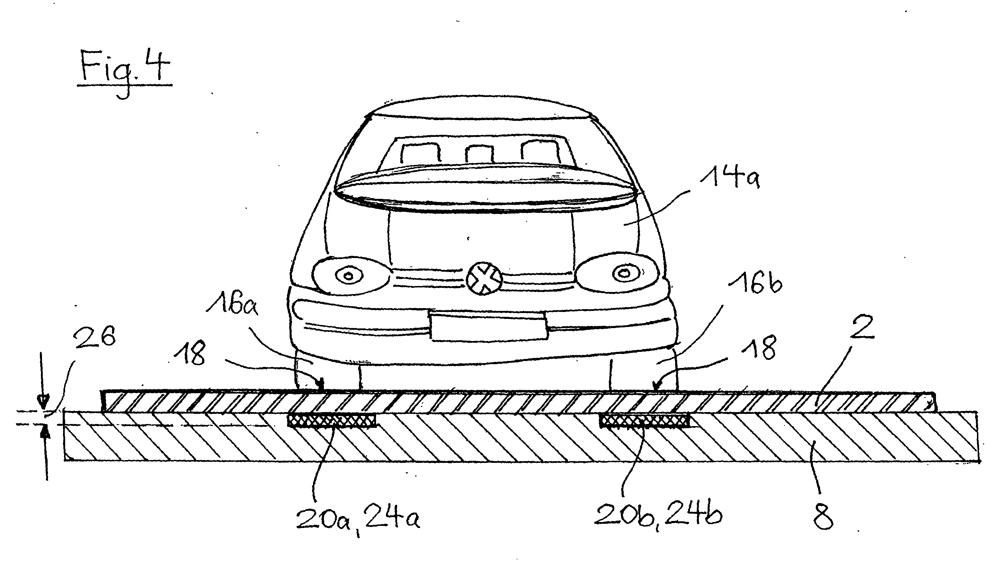

Die Fig. 4 zeigt eine spezielle Ausführungsform der erfindungsgemäßen Anordnung. Wie bereits geschildert, sind bei der Endbearbeitung von bereits mit eigenen Rädern 16a, 16b, ... versehenen Personenkraftwagen 14a, 14b, ... die Problempunkte mit den Radstandsflächen 18 gegeben. Aus diesem Grunde sieht eine Weiterbildung vor, dass die erfindungsgemäßen Verschleißgurte 20 ausschließlich im Bereich der Radspuren angeordnet sind. Die Fig. 4 zeigt nun eine solche Weiterbildung der erfindungsgemäßen Anordnung entgegen der Fahrtrichtung betrachtet: Auf einem ortsfesten Gleittisch 8 aus Holz läuft ein Werkerband 2 ab. Das Werkerband 2 befördert die zu bearbeitenden Fahrzeuge 14a, 14b .... Das dargestellte Fahrzeug 14a verfügt bereits über eigene Räder 16a, 16b. Mit Hilfe von auf dem Werkerband 2 aufvulkanisierten Radstoppern 12a, 12b wird das jeweils zu bearbeitende Fahrzeug 14a, ... arretiert. Im Spurbereich der Radstopper 12a, 12b weist der unterhalb des Werkerbandes 2 befindliche Gleittisch 8 Aussparungen 24a, 24b auf. D. h. bei zweispurigen Fahrzeugen 14a, 14b sind zwei Aussparungen 24a, 24b vorgesehen. Diese Aussparungen 24a, 24b dienen zur Aufnahme von jeweils einem Verschleißgurt 20a bzw. 20b. Die Stärke 26 der Verschleißgurte 20a, 20b ist in etwa so groß wie die Tiefe 26 der im Gleittisch 8 eingearbeiteten Aussparungen 24a, 24b. Auf diese Weise ergibt sich insgesamt eine plane Oberfläche des Werkerbandes 2.

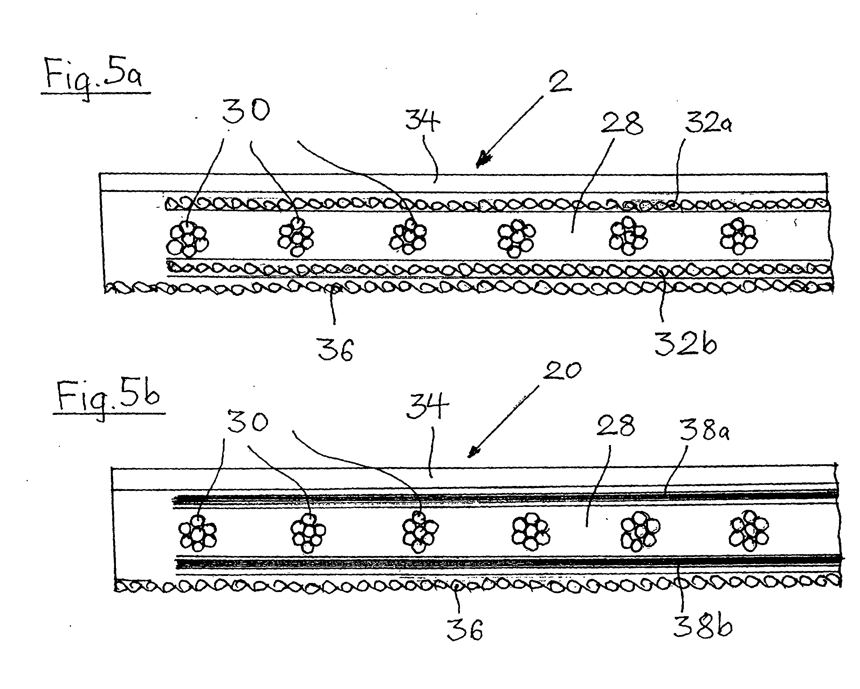

Fig. 5 zeigt den Aufbau von erfindungsgemäßen Gurten 2, 20. Der in Fig. 5a im Querschnitt dargestellte Ausschnitt eines Werkerbandes 2 weist ein Haftgummi 28 auf, in das Zugträgerseile 30 als Längsträger eingebettet sind. Außerdem ist beidseitig eine Querverstärkung 32a, 32b - vorzugsweise aus Stahlcord - vorgesehen. An der Oberseite befindet sich eine Deckplatte 34, während die Unterseite mit einem Polyester-Gleitlagengewebe 36 abgedeckt ist.

Der in Fig. 5b ebenfalls ausschnittsweise und im Querschnitt dargestellte Verschleißgurt 20 weist einen vergleichbaren Aufbau auf: In eine Lage aus Haftgummi 28 sind ebenfalls Zugträgerseile 30 als Längsträger eingearbeitet. Die beidseitig angebrachte Querverstärkung 38a, 38b ist eine Polyester-Monofil -Querverstärkung. An der Oberseite befindet sich auch hier eine Deckplatte 34, und die Unterseite ist ebenfalls mit einem Gleitlagengewebe 36 abgedeckt.

Der in Fig. b dargestellte alternative Aufbau für ein Werkerband 2 oder für ein en Verschleißgurt 20 weist ebenfalls eine Haftgummilage 28 mit implantierten verzinkten Stahlseilen 30 als Längsträger und eine beidseitige Stahl-Querarmierung 32a, 32b auf. Die Tragseite ist ebenfalls mit einer Deckplatte 34 belegt. An der Unterseite befindet sich eine PEC-Zwischenschicht 40 (PEC = Pressure Equalizing Compound), die laufseitig mit einem Polyester-Gleitlagengewebe 36 abgedeckt ist. Seitlich sind die Gurte mit einer Vollgummikante 42 abgeschlossen.

### Bezugszeichenliste

- 2: Werkerband (Gleitgurt)
- 4,6: Rollen, Trommeln (für Gleitgurt)
- 4: Antriebsrolle, Antriebstrommel (für Gleitgurt)
- 8,10: Gleittisch(e)
- 12a, 12b,: Radstopper
- 14a, 14b,: Personenkraftwagen, Fahrzeug(e)
- 16a, 16b,: Räder
- 18: Radaufstandsfläche, Belastungspunkt, Verschleißpunkt
- 20, 20a, 20b,: Verschleißgurt(e)
- 22a, 22b,: Rollen (für Verschleißgurt)
- 24a,: 24b Aussparung
- 26: Stärke des Verschleißbandes; Tiefe der Aussparung
- 28: Haftgummi
- 30: Zugträgerseile, Stahlseile
- 32a, 32b: Stahlcord-Querverstärkung
- 34: Deckplatte
- 36: Polyester-Gleitlagengewebe
- 38a, 38b: Polyester-Monofil-Querverstärkung
- 40: PEC-Zwischenschicht (PEC = Pressure Equalising Compound)
- 42: Vollgummikante

## Patentansprüche

1. Montageanordnung mit mindestens einem endlosen "Werkerband" (2), d. h. einem Gleitgurt,
der auf mindestens einem ortsfesten Gleittisch (8, 10) abläuft, zur Endbearbeitung von vormontierten und bereits mit Rädern (16a, 16b, ...) versehenen und mit Radstoppern (12a, 12b, ...) auf dem mindestens einen Werkerband (2) fixierten Personenkraftwagen (14a, 14b, ...),
**dadurch gekennzeichnet,**
**dass** zwischen Werkerband (2) und dem mindestens einen Gleittisch (8, 10) mindestens ein mit der Geschwindigkeit des Werkerbandes (2) mitlaufender endloser Verschleißgurt (20a, 20b, ...) angeordnet ist,
wobei sich Werkerband (2) und Verschleißgurt (20) jeweils in ihrer Länge voneinander unterscheiden.

2. Montageanordnung nach Anspruch 1,
**gekennzeichnet durch**
eine paarweise Anordnung von Verschleißgurten (2) im Spurbereich der Radstopper (12a, 12b, ...).

3. Montageanordnung nach Anspruch 1 oder 2,
**dadurch gekennzeichnet,**
**dass** zur Aufnahme von jeweils einem Verschleißgurt (20a bzw. 20b) der unterhalb des Werkerbandes (2) befindliche mindestens eine Gleittisch (8, 10) im Spurbereich der Radstopper (12a, 12b, ...) Aussparungen (24a, 24b) aufweist,
wobei die Tiefe (26) der im mindestens einen Gleittisch (8, 10) eingearbeiteten Aussparungen (24a, 24b) der Stärke (26) der zugeordneten Verschleißgurte (20a, 20b) entspricht.

4. Montageanordnung nach einem der Ansprüche 1 bis 3,
**dadurch gekennzeichnet,**
**dass** das Werkerband (2) durch ein quersteifes, zweilagiges Gewebe aus Polyester in Kette und Schuss verstärkt ist,
wobei die Tragseite eine Beschichtung von ca. 0,5 mm PVC aufweist und die Laufseite mit einem synthetischen, Textilfasern stabilisierenden Material imprägniert ist.

5. Montageanordnung nach einem der Ansprüche 1 bis 4,
**dadurch gekennzeichnet,**
**dass** das mindestens eine Werkerband (2) und/oder der mindestens eine Verschleißgurt (20a, 20b, ...) folgenden Aufbau aufweist:
• eine Deckplatte (34) als Tragseite,
• eine Haftgummischicht (28) mit verzinkten Stahlseilen (30) als Längscorde und mit beidseitiger Stahlarmierung (32a, 32b) bzw. (38a, 38b) als Querverstärkung,
• eine Zwischenschicht aus einer druckausgleichenden Mischung, und
• ein Polyester-Gleitlagengewebe (36) als Laufseite.

6. Montageanordnung nach einem der Ansprüche 1 bis 5,
**dadurch gekennzeichnet,**
**dass** das mindestens eine Werkerband (2) als Mitfahrband ausgebildet ist.

7. Montageamordnung nach einem der Ansprüche 1 bis 6,
**dadurch gekennzeichnet,**
**dass** die Bandgeschwindigkeit des Werkerbandes (2) ca. 1 m/Min beträgt.

8. Montageanordnung nach einem der Ansprüche 1 bis 7,
**dadurch gekennzeichnet,**
**dass** der mindestens eine Verschleißgurt (20a, 20b, ...) keinen eigenen Antrieb aufweist sondern reibschlüssig von dem mindestens einen angetriebenen Werkerband (2) mitgenommen wird.

9. Montageanordnung nach einem der Ansprüche 1 bis 8,
**dadurch gekennzeichnet,**
**dass** der mindestens eine Verschleißgurt (20a, 20b, ...) auswechselbar ist.

10. Montageanordnung nach einem der Ansprüche 1 bis 9,
**dadurch gekennzeichnet,**
**dass** der mindestens eine ortsfest angeordnete Gleittisch (8, 10) eben ausgebildet und horizontal ausgerichtet ist.

## Claims

1. Assembly arrangement having at least one endless 'operator's belt' (2), i.e. a sliding belt, which proceeds along at least one stationary sliding table (8, 10), for finishing off work on preassembled passenger vehicles (14a, 14b, etc.) which are already provided with wheels (16a, 16b, etc.) and are fixed by wheel stops (12a, 12b, etc.) on the at least one operator's belt (2), **characterized in that** arranged between the operator's belt (2) and the at least one sliding table (8, 10) is at least one endless wear belt (20a, 20b, etc.) which runs along at the speed of the operator's belt (2), the operator's belt (2) and wear belt (20) each differing from one another in terms of length.

2. Assembly arrangement according to Claim 1, **characterized by** wear belts (20) being arranged in pairs in the track region of the wheel stops (12a, 12b, etc.).

3. Assembly arrangement according to Claim 1 or 2, **characterized in that**, in order to accommodate in each case one wear belt (20a or 20b), the at least one sliding table (8, 10), which is located beneath the operator's belt (2), has cutouts (24a, 24b) in the track region of the wheel stops (12a, 12b, etc.), the depth (26) of the cutouts (24a, 24b) made in the at least one sliding table (8, 10) corresponding to the thickness (26) of the associated wear belts (20a, 20b).

4. Assembly arrangement according to one of Claims 1 to 3, **characterized in that** the operator's belt (2) is reinforced along the warp and weft by a two-layered polyester fabric which is stiff in the transverse direction, the carrying side having a coating of approximately 0.5 mm of PVC and the backing side being impregnated with a synthetic, textile fibre stabilizing material.

5. Assembly arrangement according to one of Claims 1 to 4, **characterized in that** the at least one operator's belt (2) and/or the at least one wear belt (20a, 20b, etc.) have/has the following construction:
• a covering panel (34) as the carrier side,
• an adhering-rubber layer (28) with galvanized steel cables (30) as longitudinal cords and with steel reinforcement (32a, 32b) or (38a, 38b) on both sides as transverse reinforcement,
• an intermediate layer made of a pressure-equalizing mixture, and
• a polyester sliding-layer fabric (36) as the backing side.

6. Assembly arrangement according to one of Claims 1 to 5, **characterized in that** the at least one operator's belt (2) is designed as a carry-along belt.

7. Assembly arrangement according to one of Claims 1 to 6, **characterized in that** the speed of the operator's belt (2) is approximately 1 m/min.

8. Assembly arrangement according to one of Claims 1 to 7, **characterized in that** the at least one wear belt (20a, 20b, etc.), rather than having a dedicated drive, is carried along with a friction fit by the at least one driven operator's belt (2).

9. Assembly arrangement according to one of Claims 1 to 8, **characterized in that** the at least one wear belt (20a, 20b, etc.) is exchangeable.

10. Assembly arrangement according to one of Claims 1 to 9, **characterized in that** the at least one stationary sliding table (8, 10) is of planar design and is oriented horizontally.

## Revendications

1. Agencement de montage comprenant au moins une "bande de travail" (2) sans fin, c'est-à-dire une courroie de glissement qui se déplace sur au moins une table de glissement fixe (8, 10) en vue du travail final de véhicules automobiles (14a, 14b, ...) prémontés et déjà pourvus de roues (16a, 16b, ...) et fixés sur l'au moins une bande de travail (2) avec des cales (12a, 12b, ...),
**caractérisé en ce que**
l'on prévoit entre la bande de travail (2) et l'au moins une table de glissement (8, 10) au moins une courroie résistant à l'usure (20a, 20b, ...) entraînée en boucle sans fin à la vitesse de la bande de travail (2), la bande de travail (2) et la courroie résistant à l'usure (20) se distinguant l'une de l'autre par leur longueur.

2. Agencement de montage selon la revendication 1,
**caractérisé par**
un agencement par paire de courroies résistant à l'usure (20) dans la région de la voie des cales (12a, 12b, ...).

3. Agencement de montage selon la revendication 1 ou 2, **caractérisé en ce que**
pour recevoir au moins une courroie résistant à l'usure (20a, respectivement 20b), l'au moins une table de glissement (8, 10) se trouvant en dessous de la bande de travail (2) présente des évidements (24a, 24b) dans la région de la voie des cales (12a, 12b, ...), la profondeur (2b) des évidements (24a, 24b) pratiqués dans au moins une table de glissement (8, 10) correspondant à la force (2b) de la courroie résistant à l'usure (20a, 20b) associée.

4. Agencement de montage selon l'une quelconque des revendications 1 à 3,
**caractérisé en ce que**
la bande de travail (2) est renforcée par un tissu bicouche à rigidité transversale, en polyester en chaîne et trame, le côté de support présentant un revêtement d'environ 0,5 mm de PVC et le côté de roulement étant imprégné d'un matériau synthétique stabilisant les fibres textiles.

5. Agencement de montage selon l'une quelconque des revendications 1 à 4,
**caractérisé en ce que**
l'au moins une bande de travail (2) et/ou l'au moins une courroie résistant à l'usure (20a, 20b, ...) présentent la construction suivante :
- une plaque de recouvrement (34) servant de côté de support,
- une couche de caoutchouc d'adhésion (28) avec des câbles en acier galvanisés (30) servant de câbles longitudinaux et comprenant un renforcement en acier bilatéral (32a, 32b) ou (38a, 38b) servant de renforcement transversal,
- une couche intermédiaire en mélange compensateur de pression, et
- un tissu à couches de glissement en polyester (3b) servant de côté de roulement.

6. Agencement de montage selon l'une quelconque des revendications 1 à 5,
**caractérisé en ce qu'**
au moins une bande de travail (2) est réalisée en tant que bande à entraînement conjoint.

7. Agencement de montage selon l'une quelconque des revendications 1 à 6,
**caractérisé en ce que**
la vitesse de la bande de travail (2) est d'environ 1 m/min.

8. Agencement de montage selon l'une quelconque des revendications 1 à 7,
**caractérisé en ce que**
l'au moins une courroie résistant à l'usure (20a, 20b, ...) ne dispose pas de son propre entraînement mais est entraînée par friction par l'au moins une bande de travail (2) entraînée.

9. Agencement de montage selon l'une quelconque des revendications 1 à 8,
**caractérisé en ce que**
l'au moins une courroie résistant à l'usure (20a, 20b, ...) peut être remplacée.

10. Agencement de montage selon l'une quelconque des revendications 1 à 9,
**caractérisé en ce que**
l'au moins une table de glissement disposée fixement (8, 10) est plane et est orientée horizontalement.
